(19) Europäisches Patentamt
European Patent Office
Office européen des brevets

(11) EP 1 572 769 B1

(12) # EUROPÄISCHE PATENTSCHRIFT

(45) Veröffentlichungstag und Bekanntmachung des Hinweises auf die Patenterteilung:
**19.03.2008 Patentblatt 2008/12**

(21) Anmeldenummer: **03813551.3**

(22) Anmeldetag: **18.10.2003**

(51) Int Cl.:
*C08F 285/00* (2006.01) *C08L 33/08* (2006.01)
*C08L 51/00* (2006.01) *C08L 25/12* (2006.01)

(86) Internationale Anmeldenummer:
**PCT/EP2003/011543**

(87) Internationale Veröffentlichungsnummer:
**WO 2004/056893 (08.07.2004 Gazette 2004/28)**

(54) **VERFAHREN ZUR HERSTELLUNG VON WÄSSRIGEN DISPERSIONEN**

METHOD FOR PRODUCING AQUEOUS DISPERSIONS

PROCEDE DE PREPARATION DE DISPERSIONS AQUEUSES

(84) Benannte Vertragsstaaten:
**AT BE BG CH CY CZ DE DK EE ES FI FR GB GR HU IE IT LI LU MC NL PT RO SE SI SK TR**

(30) Priorität: **19.12.2002 DE 10260089**

(43) Veröffentlichungstag der Anmeldung:
**14.09.2005 Patentblatt 2005/37**

(73) Patentinhaber: **Evonik Röhm GmbH**
**64293 Darmstadt (DE)**

(72) Erfinder:
- **SCHULTES, Klaus**
**65197 Wiesbaden (DE)**
- **SÜFKE, Thomas**
**64390 Erzhausen (DE)**
- **MÜLLER, Reiner**
**64584 Biebesheim (DE)**
- **SCHIKOWSKY, Hartmut**
**64283 Darmstadt (DE)**
- **HÖSS, Werner**
**64347 Griesheim (DE)**

(56) Entgegenhaltungen:
**EP-A- 0 989 144**
**US-A- 4 513 118**
**US-A- 4 521 568**
**US-A- 5 314 965**
**US-A1- 2002 123 568**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Verfahren zur Herstellung von wässrigen Dispersionen. Insbesondere bezieht sie sich auf Verfahren zur Herstellung von Kern-Schale-Teilchen in wässriger Dispersion; welche zur Schlagzähmodifizierung von Poly(meth)acrylat-Formmassen eingesetzt werden können.

Es ist bereits seit langem bekannt, dass die Schlagzähigkeit von Formmassen, insbesondere von Poly(meth) acrylat-Formmassen, verbessert werden kann, indem man der Formmasse eine geeignete Menge sogenannter Schlagzähmodifizierer zusetzt. Dabei hat sich der Einsatz von Kern-Schale-Teilchen und/oder Kern-Schale-Schale-Teilchen in der Technik durchgesetzt. Diese weisen im allgemeinen eine elastomere Phase auf, wobei bei einem Kern-Schale-Aufbau meist der Kern und bei einem Kern-Schale-Schale-Aufbau meist die auf den Kern aufgepfropfte erste Schale die elastomere Phase darstellen.

Beispielsweise offenbart das US-Patent US 3 793 402 schlagzähe Formmassen, insbesondere auf Poly(meth) acrylat-Basis, welche 90 bis 4 Gew.-% eines mehrstufigen Kern-Schale-Teilchens mit einem harten Kern, einer elastomeren ersten Schale und einer harten zweiten Schale aufweisen. Typische Hauptbestandteile des Kerns und der zweiten Schale sind Alkylmethacrylate mit 1 bis 4 Kohlenstoffatomen im Alkylrest, insbesondere Methylmethacrylat. Die erste Schale ist im wesentlichen aus Butadien, substituierten Butadienen und/oder Alkylacrylaten mit 1 bis 8 Kohlenstoffatomen im Alkylrest aufgebaut. Sie kann jedoch auch 0 bis 49,9 Gew.-%, insbesondere 0,5 bis 30 Gew.-% copolymerisierbare Monomer-Einheiten, wie beispielsweise copolymerisierbare, monoethylenisch-ungesättigte Monomer-Einheiten, enthalten. Dabei ist gemäß US 3 793 402 die Anwesenheit von 10 bis 25 Gew.-% copolymerisierbaren, monoethylenisch-ungesättigten Monomer-Einheiten, insbesondere von Styrol, ganz besonders vorteilhaft.

Der Gesamtdurchmesser der Kern-Schale-Teilchen liegt im Bereich von 100 bis 300 nm.

Die Herstellung der Kern-Schale-Teilchen erfolgt durch mehrstufige Emulsionspolymerisation, wobei thermische Initiatoren, wie Persulfate oder Redox-Initiatursysteme eingesetzt werden. Dabei soll die Polymerisation bei einer Temperatur im Bereich von 0 bis 125 °C, insbesondere im Bereich von 30 bis 95 °C erfolgen.

In ähnlicher Weise beschreibt die deutsche Patentanmeldung DE 41 21 652 A1 Schlagzähmodifizierer für thermoplastische Kunststoffe, wie Polymethylmethacrylat, bestehend aus einem wenigstens dreiphasigen Emulsionspolymerisat, enthaltend

A) einen harten Kern aus einem vernetzten Homo- oder Copolymerisat von ethylenisch- ungesättigten, radikalisch polymerisierbaren Monomeren;

B) einer in Gegenwart des Kernmaterials erzeugten Elastomerphase mit einer Glasübergangstemperatur nicht über 10 °C, die aufgebaut ist aus

a) einem Alkylester der Acrylsäure mit 1 bis 8 Kohlenstoffatomen im Alkylrest;
b) wenigstens einem vernetzenden Comonomeren mit zwei oder mehr polymerisierbaren Doppelbindungen im Molekül;
c) Arylalkylacrylat oder -methacrylat;
d) einer in Gegenwart der Elastomerphase erzeugten Hartphase aus einem Homo- oder Copolymerisat von ethylenisch-ungesättigten, radikalisch polymeriserbaren Monomeren mit einer Glasübergangstemperatur von wenigstens 50 °C.

Eine examplarisch in dieser Druckschrift angeführte Formmasse (Beispiel 3) weist eine Izod-Kerbschlagzähigkeit bei Raumtemperatur von 6,2 kJ/$m^2$, bei -10 °C von 4,7 kJ/$m^2$ und bei -20 °C von 3,7 kJ/$m^2$ auf. Die Vicat-Erweichungstemperatur der Formmasse beträgt dabei 97 °C.

Die Herstellung der Kern-Schale-Teilchen erfolgt ebenfalls mittels mehrstufiger Emulsionspolymerisation, wobei Alkali- oder Ammoniumperoxodisulfat als Initiator eingesetzt werden und die Polymerisation bei einer Temperatur im Bereich von 20 bis 100 °C, beispielsweise bei 50 °C, durchgeführt wird.

Die deutsche Patentanmeldung DE 41 36 993 A1 offenbart schlagzähmodifizierte Formmassen, welche 10 bis 96 Gew.-% eines Polymerisats auf Basis von Polymethylmethacrylat und 4 bis 90 Gew.-% eines mehrstufigen Kern-Schale-Schale-Teilchens enthalten, wobei für die Herstellung des Kerns und der zweiten Schale jeweils eine Monomermischung eingesetzt wird, die im wesentlichen Methylmethacrylat enthält. Die Monomermischung für die erste Schale umfasst 60 bis 89,99 Gew.-% Acrylsäurealkylester mit 1 bis 20 Kohlenstoffatomen im Alkylrest und/oder Cycloalkylacrylate mit 5 bis 8 Kohlenstoffatomen im Cycloalkylrest und 10 bis 39,99 Gew.-% Acrylsäurephenyl-alkylester mit 1 bis 4 Kohlenstoffatomen im Alkylrest sowie gegebenenfalls weitere Bestandteile. Der mittlere Teilchendurchmesser der Kern-Schale-Schale-Teilchen liegt im Bereich von 50 bis 1000 nm, insbesondere im Bereich von 150 bis 400 nm.

Gemäß dieser Druckschrift werden die Kern-Schale-Teilchen durch ein mehrstufiges Saatlatex-Verfahren erhalten, bei welchem man Ammonium-oder Alkyliperoxodisulfate, wie Kaliumperoxodisulfat, oder Initiatorkombinationssysteme als Polymerisationsinitiatoren einsetzt, wobei die Polymerisationstemperatur im Fall der thermischen zu aktivierenden Ammonium- und Alkyliperoxodisulfate bei 50 bis 100 °C liegen soll.

Das europäische Patent EP 0 828 772 B1 beschreibt die Schlagzähmodifizierung von Poly(meth)acrylaten mittels mehrstufiger Kern-Schale-Teilchen, die aus einem Kern, einer ersten Schale und gegebenenfalls einer zweiten Schale bestehen und von vinylisch ungesättigten Verbindungen mit mindestens zwei gleich reaktiven Doppelbindungen frei sind. Dabei enthält der Kern ein erstes (Meth)acrylpolymer. Die erste Schale weist ein Polymer mit tiefer Glasübergangstemperatur auf, welches 0 bis 25 Gew.-%, insbesondere 5 bis 26 Gew.-%, eines styrolischen Monomers und 75 bis 100 Gew.-% eines (Meth)acrylmonomers, das ein Homopolymer mit einer Glasübergangstemperatur zwischen -75 und -5° C bildet, umfasst. Die gegebenenfalls vorhandene zweite Schale enthält ein zweites (Meth)acrylpolymer, das dem ersten (Meth)acrylpolymer entsprechen oder von ihm verschieden sein kann. Der Gesamtdurchmesser der Kern-Schale-Teilchen liegt im Bereich von 250 bis 320 nm.

Die Herstellung der Kern-Schale-Teilchen erfolgt wiederum durch mehrstufige Emulsionspolymerisation bei 80 °C, wobei als Initiator ein Kaliumpersulfat eingesetzt wird.

Obwohl die vorstehend beschriebenen Verfahren bei der Herstellung von Kern-Schale-Teilchen üblicherweise zum Einsatz kommen, weisen sie alle den Nachteil auf, dass die Polymerisation bei einer vergleichsweise niedrigen Monomerkonzentration, i. a. kleiner 50,0 Gew.-%, durchgeführt werden müssen, um die gewünschten Teilchengrößen mit einer engen Teilchengrößenverteilung zu erhalten. Einer Polymerisation bei höherer Monomerkonzentration hingegen führt in zu einer starken Verbreiterung der Teilchengrößenverteilung und zur Bildung von großen Mengen an Koagulat, welches die Materialeigenschaften der Kern-Schale-Teilchen deutlich verschlechtert.

Für die Anwendung, insbesondere für die Schlagzähmodifizierung von Formmassen, können die Kern-Schale-Teilchen nicht als wässrige Dispersion eingesetzt werde, sondern müssen vielmehr aus der wässrigen Dispersion isoliert werden. Somit wirkt sich der niedrige Feststoffgehalt der wässrigen Dispersion unmittelbar nachteilig auf den möglichen Einsatz der vorstehend genannten Kern-Schale-Teilchen aus, da zu ihrer Separation ein großer Aufwand an Energie und sonstigen Ressourcen erforderlich ist. Es werden daher effizientere Verfahren zur Herstellung von Kern-Schale-Teilchen benötigt.

Neben den Emulsionspolymerisaten werden vereinzelt auch Suspensionspolymerisate zur Schlagzähmodifizierung von Formmassen eingesetzt. Hier liegt der Kautschuk mit beispielsweise Polymethylmethacrylat gepfropft relativ fein verteilt in der Matrix der Formmasse, beispielsweise Polymethylmethacrylat, vor. Die elastomere Phase besteht aus einem meist vernetzten Copolymerisat mit niedriger Glasübergangstemperatur kleiner 25 °C, welche üblicherweise Alkylacrylat-Einheiten mit 1 bis 8 Kohlenstoffatomen im Alkylrest, insbesondere Butylacrylat-Einheiten, als Hauptkomponente aufweisen. Vereinzelt werden auch Polybutadien oder Polybutadien-Copolymere als Zähphase eingesetzt.

Obwohl schon unter Verwendung der vorstehend beschriebenen Schlagzähmodifizierer eine deutliche Verbesserung der Kerbschlagzähigkeit erreicht werden kann, ist diese jedoch für viele Anwendungen noch nicht vollkommen befriedigend. So erfordert insbesondere die Schlagzähmodifizierung bei Raumtemperatur (23°C) eine verhältnismäßig große Menge dieser Schlagzähmodifizierer, welches wiederum zu einer deutlichen Verschlechterung der anderen, für die Anwendung bedeutenden Eigenschaften der Formmasse, insbesondere des E-Moduls, der Schmelzviskosität, der Vicat-Temperatur und der Strangaufweitung, führt.

Von der Technik werden daher Schlagzähmodifizierer gefordert, welche bei möglichst geringen Mengen an Schlagzähmodifizierer eine hinreichende Verbesserung der Kerbschlagzähigkeit einer Formmasse, insbesondere bei Raumtemperatur ermöglicht, ohne dass gleichzeitig die anderen bedeutenden Eigenschaften der Formmasse, insbesondere der E-Modul, die Schmelzviskosität, die Vicat-Temperatur und die Strangaüfweitung, merklich verschlechtert werden. Dabei soll die Formmasse eine Kerbschlagzähigkeit nach Charpy (ISO 179) bei 23 °C vorzugsweise mindestens 6,0 kJ/$m^2$ und bei -10 °C vorzugsweise mindestens 2,5 kJ/$m^2$, ein E-Modul (ISO 527-2) vorzugsweise größer 1500 MPa, einen Haze nach ASTM D 1003 (1997) von vorzugsweise maximal 2,5 %, eine Schmelzviskosität vorzugsweise größer 2000 Pa s und günstigerweise kleiner 4500 Pa s, eine Vicat-Erweichungstemperatur vorzugsweise von mindestens 85 °C, günstigerweise von mindestens 90 °C, insbesondere von mindestens 93 °C, eine Transmission (D 65/10°) nach DIN 5033/5036 von vorzugsweise mindestens 88,5 % sowie eine Strangaufweitung vorzugsweise im Bereich von 0 bis 20 % aufweisen.

In Anbetracht des Standes der Technik war es nun Aufgabe der vorliegenden Erfindung, Schlagzähmodifizierer für Formmassen, insbesondere für Poly(meth)acrylat-Formmassen, zur Verfügung zu stellen, welche eine Verbesserung der Kerbschlagzähigkeit von Formmassen, insbesondere bei Raumtemperatur, ermöglichen, ohne gleichzeitig die anderen, für die Anwendung bedeutenden Eigenschaften der Formmasse, insbesondere der E-Modul, die Schmelzviskosität, die Vicat-Temperatur und die Strangaufweitung, merklich zu verschlechtern. Dabei sollten die Formmassen eine Kerbschlagzähigkeit nach Charpy (ISO 179) bei 23 °C vorzugsweise mindestens 6,0 kJ/$m^2$ und bei -10 °C vorzugsweise mindestens 2,5 kJ/$m^2$, ein E-Modul (ISO 527-2) vorzugsweise größer 1500 MPa, einen Haze nach ASTM D 1003 (1997) von vorzugsweise maximal 2,5 %, eine Schmelzviskosität vorzugsweise größer 2000 Pa s und günstigerweise kleiner 4500 Pa s, eine Vicat-Erweichungstemperatur vorzugsweise von mindestens 85 °C, günstigerweise von mindestens 90 °C, insbesondere von mindestens 93 °C, eine Transmission (D 65/10°) nach DIN 5033/5036 von vorzugsweise mindestens 88,5 % sowie eine Strangaufweitung vorzugsweise im Bereich von 0 bis 20 % aufweisen.

Eine weitere Aufgabe der vorliegenden Erfindung bestand darin, ein effizienteres Verfahren zur Herstellung von Kern-Schale-Teilchen bereitzustellen, welches insbesondere weniger aufwendige Isolierung der Kern-Schale-Teilchen erlaubt.

Eine Aufgabe der vorliegenden Erfindung war auch darin zu erblicken, ein Verfahren zur Herstellung von Kern-Schale-Teilchen anzugeben, das auf einfache Art und Weise, im industriellen Maßstab und kostengünstig durchführbar ist.

Der vorliegenden Erfindung lag ferner die Aufgabe zugrunde, ein Verfahren zur Herstellung von Kern-Schale-Teilchen mit möglichst enger Teilchengrößenverteilung, vorzugsweise mit einem $U_{80}$-Wert kleiner 0,22, zur Verfügung zu stellen,

Aufgabe der vorliegenden Erfindung war auch, ein Verfahren zur Herstellung von Kern-Schale-Teilchen zu finden, bei welchem möglichst wenig, vorzugsweise weniger als 5,0 Gew.-%, Koagulat gebildet wird.

Darüber hinaus bestand eine weitere Aufgabe der vorliegenden Erfindung darin, ein Verfahren zur Herstellung von Kern-Schale-Teilchen mit einem Teilchenradius, gemessen nach dem Coulter-Verfahren, im Bereich von 150,0 bis kleiner 250,0 nm anzugeben, da diese Kern-Schale-Teilchen sich zur Schlagzähmodifizierung von Formmassen, insbesondere von Polyalkyl(meth)acrylat-Formmasse ganz besonders eignen.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren zur Herstellung einer wässrigen Dispersion mit allen Merkmalen des vorliegenden Patentanspruchs 1. Zweckmäßige Abwandlungen der erfindungsgemäßen Vorgehensweise werden in den auf Anspruch 1 rückbezogenen Unteransprüchen unter Schutz gestellt. Der Produktanspruch 11 schützt die durch das Verfahren erhältlichen Kern-Schale-Teilchen. Weiterhin werden schlagzähmodifizierte Poly(meth)acrylat-Formmassen, welche erfindungsgemäße Kern-Schale-Teilchen enthalten, sowie bevorzugte Einsatzgebiete dieser Formmassen beansprucht.

Dadurch, dass man ein Verfahren zur Herstellung einer wässrigen Dispersion zur Verfügung stellt, bei welchem man

a) Wasser und Emulgator vorlegt,

b) 25,0 bis 45,0 Gew.-Teile einer ersten Zusammensetzung enthaltend

A) 50,0 bis 99,9 Gew.- Teile von C) verschiedene Alkylmethacrylate mit 1 bis 20 Kohlenstoffatomen im Alkylrest,
B) 0,0 bis 40,0 Gew.- Teile von C) verschiedene Alkylacrylate mit 1 bis 20 Kohlenstoffatomen im Alkylrest,
C) 0,1 bis 10,0 Gew.- Teile vernetzende Monomere und
D) 0,0 bis 8,0 Gew.- Teile styrolische Monomere der allgemeinen Formel (I)

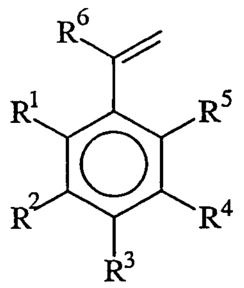

(I)

wobei die Reste $R^1$ bis $R^5$ jeweils unabhängig voneinander Wasserstoff, ein Halogen, eine $C_{1-6}$-Alkylgruppe oder eine $C_{2-6}$-Alkenylgruppe bezeichnen und der Rest $R^6$ Wasserstoff oder eine Alkylgruppe mit 1 bis 6 Kohlenstoffatomen ist,

zugibt und bis zu einem Umsatz von mindestens 85,0 Gew.-%, bezogen auf das Gesamtgewicht der Komponenten A), B), C) und D), polymerisiert,

c) 35,0 bis 55,0 Gew.-Teile einer zweiten Zusammensetzung enthaltend

E) 80,0 bis 100,0 Gew.- Teile (Meth)acrylate
F) 0,05 bis 10,0 Gew.-Teile vernetzende Monomere und
G)0,0 bis 20,0 Gew.- Teile styrolische Monomere der allgemeinen Formel (I),

zugibt und bis zu einem Umsatz von mindestens 85,0 Gew.-%, bezogen auf das Gesamtgewicht der Komponenten E), F) und G), polymerisiert,

d) 10,0 bis 30,0 Gew.-Teile einer dritten Zusammensetzung enthaltend

H) 50,0 bis 100,0 Gew.- Teile Alkylmethacrylate mit 1 bis 20 Kohlenstoffatomen im Alkylrest,
I) 0,0 bis 40,0 Gew.- Teile Alkylacrylate mit 1 bis 20 Kohlenstoffatomen im Alkylrest und
J) 0,0 bis 10,0 Gew.- Teile styrolische Monomere der allgemeinen Formel (I)
zugibt und bis zu einem Umsatz von mindestens 85,0 Gew.-%, bezogen auf das Gesamtgewicht der Komponenten H), I) und J), polymerisiert,

wobei sich die angegebenen Gewichtsteile der Zusammensetzungen b), c) und d) zu 100,0 Gewichtsteilen addieren und
sich das Verfahren dadurch auszeichnet, dass man

e) die jede Polymerisation bei einer Temperatur im Bereich von >60 bis < 90 °C durchführt und

f) die relativen Anteile aller Substanzen derart wählt, dass das Gesamtgewicht der Komponenten A) bis J), bezogen auf das Gesamtgewicht der wässrigen Dispersion, größer 50,0 Gew.-% ist,

gelingt es auf nicht ohne weiteres vorhersehbare Weise, ein Verfahren zugänglich zu machen, welches die effiziente Herstellung von Kern-Schale-Teilchen in wässriger Dispersion erlaubt. Dabei wird durch den hohen Feststoffgehalt der wässrigen Dispersion die Separation der Kern-Schale-Teilchen gegenüber den herkömmlichen Verfahren wesentlich erleichtert.

Darüber hinaus lassen sich durch die erfindungsgemäße Vorgehensweise eine Reihe weiterer Vorteile erzielen. Hierzu gehören u. a.:

⇒ Das erfindungsgemäße Verfahren ist auf einfache Art und Weise großtechnisch und kostengünstig durchführbar.

⇒ Die durch das erfindungsgemäße Verfahren erhältlichen Kern-Schale-Teilchen zeichnen sich durch eine enge Teilchengrößenverteilung, vorzugsweise einem $U_{80}$-Wert kleiner 0,22, aus.

⇒ Die Bildung von Koagulat wird beim erfindungsgemäßen Verfahren nahezu vollständig unterdrückt.

⇒ Das erfindungsgemäße Verfahren eignet sich insbesondere für die Herstellung von Kern-Schale-Teilchen mit einem Teilchenradius, gemessen nach dem Coulter-Verfahren, im Bereich von 150,0 bis kleiner 250,0 nm.

⇒ Durch das erfindungsgemäße Verfahren werden Schlagzähmodifizierer für Formmassen, insbesondere für Poly(meth)acrylat-Formmassen bereitgestellt, welche eine Verbesserung der Kerbschlagzähigkeit von Formmassen, insbesondere bei Raumtemperatur, ermöglichen, ohne gleichzeitig die anderen, für die Anwendung bedeutenden Eigenschaften der Formmasse, insbesondere der E-Modul, die Schmelzviskosität, die Vicat-Temperatur und die Strangaufweitung, merklich zu verschlechtern. Dabei weisen erfindungsgemäß besonders geeignete Formmassen eine Kerbschlagzähigkeit nach Charpy (ISO 179) bei 23 °C vorzugsweise mindestens 6,0 kJ/$m^2$ und bei -10 °C vorzugsweise mindestens 2,5 kJ/$m^2$, ein E-Modul (ISO 527-2) vorzugsweise größer 1500 MPa, einen Haze nach ASTM D 1003 (1997) von vorzugsweise maximal 2,5 %, eine Schmelzviskosität vorzugsweise größer 2000 Pa s und günstigerweise kleiner 4500 Pa s, eine Vicat-Erweichungstemperatur vorzugsweise von mindestens 85 °C, günstigerweise von mindestens 90 °C, insbesondere von mindestens 93 °C, eine Transmission (D 65/10°) nach DIN 5033/5036 von vorzugsweise mindestens 88,5 % sowie eine Strangaufweitung vorzugsweise im Bereich von 0 bis 20 % auf.

⇒ Durch Verwendung der erfindungsgemäßen Kern-Schale-Teilchen werden Formmassen mit deutlich verbesserten Kerbschlägzähigkeit-Werten, insbesondere bei tiefen Temperaturen kleiner 0 °C, zweckmäßigerweise Formmassen mit einer Kerbschlagzähigkeit nach Izod gemäß ISO 180 von mindestens 3,5 kJ/$m^2$ bei -10 °C, zugänglich.

⇒ Im Vergleich mit herkömmlichen Schlagzähmodifizierern reichen deutlich geringere Mengen der erfindungsgemäßen Kern-Schale-Teilchen aus, um Formmassen mit vergleichbaren Kerbschlagzähigkeiten bei Raumtemperatur, insbesondere bei 23 °C, zu erhalten.

⇒ Die auf erfindungsgemäße Weise schlagzähmodifizierten Formmassen zeichnen sich durch ein deutlich verbessertes Eigenschaftsprofil bei Raumtemperatur, insbesondere bei 23 °C, aus. Dies prädestiniert sie für Anwendungen diesen Temperaturen, insbesondere bei Temperaturen im Bereich von 0 °C bis 50 °C.

Gemäß der vorliegenden Erfindung erfolgt die Herstellung einer wässrigen Dispersion durch ein Verfahren, bei welchem man Wasser und Emulgator vorlegt. Dabei enthält die Vorlage vorzugsweise 90,00 bis 99,99 Gew.-Teile Wasser und 0,01 bis 10,00 Gew.-Teile Emulgator, wobei sich die angegebenen Gewichtsteile günstigerweise zu 100,00 Gewichtsteilen addieren.

Zu dieser Vorlage werden dann schrittweise in der folgenden Reihenfolge

b) 25,0 bis 45,0 Gew.-Teile einer ersten Zusammensetzung zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf das Gesamtgewicht der Komponenten A), B), C) und D), polymerisiert,
c) 35,0 bis 55,0 Gew.-Teile einer zweiten Zusammensetzung zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf das Gesamtgewicht der Komponenten E), F) und G), polymerisiert,
d) 10,0 bis 30,0 Gew.-Teile einer dritten Zusammensetzung zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf das Gesamtgewicht der Komponenten H), I) und J), polymerisiert,

wobei sich die angegebenen Gewichtsteile zu 100,0 Gewichtsteilen addieren.

Dabei bezeichnen Polymere im Sinne der vorliegenden Erfindung Verbindungen, welche im Vergleich mit der jeweiligen Ausgangsverbindung A) bis J), dem sogenannten Monomer, mindestens das zehnfache Molekulargewicht aufweisen.

Die Verfolgung des Reaktionsfortschrittes der Polymerisation in jeden Schritt kann auf bekannte Weise, beispielsweise gravimetrisch oder mittels Gaschromatographie erfolgen.

Die erste Zusammensetzung enthält

A)50,0 bis 99,9 Gew.-Teile, zweckmäßigerweise 60,0 bis 99,9 Gew.-Teile, vorzugsweise 75,0 bis 99,9 Gew.-Teile, insbesondere 85,0 bis 99,5 Gew.- Teile, Alkylmethacrylate mit 1 bis 20, vorzugsweise 1 bis 12, insbesondere 1 bis 8, Kohlenstoffatomen im Alkylrest,
B) 0,0 bis 40,0 Gew.-Teile, vorzugsweise 0,0 bis 24,9 Gew.-Teile, insbesondere 0,1 bis 14,9 Gew.- Teile, Alkylacrylate mit 1 bis 20, vorzugsweise 1 bis 12, insbesondere 1 bis 8, Kohlenstoffatomen im Alkylrest,
C) 0,1 bis 10,0 Gew.-Teile, vorzugsweise 0,1 bis 5,0 Gew.-Teile, insbesondere 0,1 bis 2,0 Gew.-Teile, vernetzende Monomere und
D)0,0 bis 8,0 Gew.-Teile styrolische Monomere der allgemeinen Formel (1)

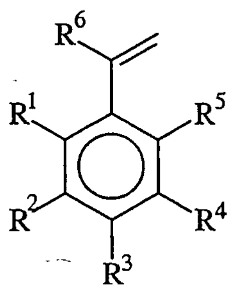

(I)

wobei sich die angegebenen Gewichtsteile vorzugsweise zu 100,0 Gew.-Teile ergänzen.

Dabei sind die Verbindungen A), B), C) und D) natürlich voneinander verschieden, insbesondere umfassen die Verbindungen A) und B) keine vernetzenden Monomere C).

Die Reste $R^1$ bis $R^5$ bezeichnen jeweils unabhängig voneinander Wasserstoff, ein Halogen, insbesondere Fluor, Chlor oder Brom, oder eine Alkylgruppe mit 1 bis 6 Kohlenstoffatomen, vorzugsweise Wasserstoff. Der Rest $R^6$ kennzeichnet Wasserstoff oder eine Alkylgruppe mit 1 bis 6 Kohlenstoffatomen, vorzugsweise Wasserstoff. Besonders geeignete Alkylgruppen mit 1 bis 6 Kohlestoffatomen sind Methyl-, Ethyl-, n-Propyl-, iso-Propyl-, n-Butyl-, sec-Butyl-, tert.-Butyl-, n-Pentyl-, n-Hexylgruppen sowie Cyclopentyl- und Cyclohexylgruppen.

Somit umfassen styrolische Monomere der allgemeinen Formel (I) Styrol, substituierte Styrole mit einem Alkylsubstituenten in der Seitenkette, wie beispielsweise α-Methylstyrol und α-Ethylstyrol, substituierte Styrole mit einem Alkylsubstituenten an dem Ring, wie beispielsweise Vinyltoluo! und p-Methylstyrol, halogenierte Styrole. wie beispielsweise Monochlorstyrole, Dichlorstyrole, Tribromstyrole und Tetrabromstyrole.

Unter den oben erwähnten Alkylmethacrylaten (A) werden Ester der Methacrylsäure verstanden, beispielsweise Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyloctylmethacrylat, 2-tert.-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylmethacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butyl-cyclohexylmethacrylat, Cycloheptylmethacrylat, Cyclooctylmethacrylat, Bornylmethacrylat und Isobornylmethacrylat.

Gemäß einer besonders bevorzugten Ausführungsform der vorliegenden Erfindung enthält die erste Zusammensetzung, bezogen auf das Gesamtgewicht der Komponenten A) bis D), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Unter den oben erwähnten Alkylacrylaten (B) werden Ester der Acrylsäure verstanden, beispielsweise Methylacrylat, Ethylacrylat, Propylacrylat, Isopropylacrylat, n-Butylacrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert.-Butylheptylacrylat, 3-iso-Propylheptylacrylat, Decylacrylat, Undecylacrylat, 5-Methylundecylacrylat, Dodecylacrylat, 2-Methyldodecylacrylat, Tridecylacrylat, 5-Methyltridecylacrylat, Tetradecylacrylat, Pentadecylacrylat, Hexadecylacrylat, 2-Methylhexadecylacrylat, Heptadecylacrylat, 5-iso-Propylheptadecylacrylat, 5-Ethyloctadecylacrylat, Octadecylacrylat, Nonadecylacrylat, Eicosylacrylat, Cycloalkylacrylate, wie beispielsweise Cyclopentylacrylat, Cyclohexylacrylat, 3-Vinyl-2-butylcyclohexylacrylat, Cycloheptylacrylat, Cyclooctylacrylat, Bornylacrylat und Isobornylacrylat.

Vernetzende Monomere (C) umfassen alle die Verbindungen, welche in der Lage sind, unter den vorliegenden Polymerisationsbedingungen eine Vernetzung herbeizuführen. Hierzu gehören insbesondere

(a) Difunktionelle (Meth)acrylate, vorzugsweise Verbindungen der allgemeinen Formel:

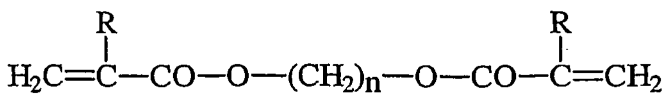

worin R Wasserstoff oder Methyl ist und n eine positive ganze Zahl größer gleich 2, vorzugsweise zwischen 3 und 20 bezeichnet, insbesondere Di(meth)acrylate des Propandiols, Butandiols, Hexandiols, Octandiols, Nonandiols, Decandiols und des Eicosandiols;
Verbindungen der allgemeinen Formel:

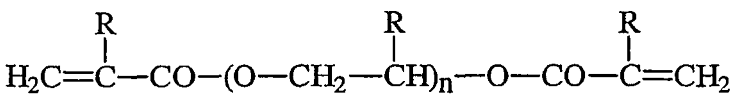

worin R Wasserstoff oder Methyl ist und n eine positive ganze Zahl zwischen 1 und 14 bedeutet, insbesondere Di(meth)acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols.
Glycerindi(meth)acrylat, 2,2'- Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2- hydroxypropoxy)butan.

(b) Tri- oder polyfunktionelle (Meth)acrylate, insbesondere Trimethylolpropantri(meth)acrylate und Pentaerythrittetra(meth)acrylat.

(c) Pfropfvernetzer mit mindestens zwei unterschiedlich reaktiven C-C-Doppelbindungen, insbesondere Allylmethacrylat und Allylacrylat;

(d) aromatische Vernetzer, insbesondere 1,2-Divinylbenzol, 1,3-Divinylbenzol und 1,4-Divinylbenzol.

Vorzugsweise erfolgt die Monomerauswahl bzw. die Auswahl der Gewichtsanteile der Monomere A) bis D) der ersten Zusammensetzung derart, dass das durch die Polymerisation der ersten Monomermischung erhältliche Polymer eine Glasübergangstemperatur Tg von mindestens 10 °C, vorzugsweise von mindestens 30 °C, aufweist. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei $X_n$ für den Massebruch (Gew.-%/100) des Monomeren n steht und $Tg_n$ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.

Die zweite Monomermischung enthält

E) 80,0 bis 100,0 Gew.-Teile, vorzugsweise 92,0 bis 98,0 Gew.-Teile, von F) verschiedene (Meth)acrylate
F) 0,05 bis 10,0 Gew.-%-Teile, vorzugsweise 0,1 bis 2,0 Gew.-%, vernetzende Monomere und
G)0,0 bis 20,0 Gew.-Teile, vorzugsweise 8,0 bis 20,0 Gew.-Teile styrolische Monomere der allgemeinen Formel (I),

wobei sich die angegebenen Gewichtsteile vorzugsweise zu 100,0 Gew.-Teile addieren.

Dabei sind die Verbindungen E), F) und G) natürlich voneinander verschieden, insbesondere umfassen die Verbindungen E) keine vernetzenden Monomere F).

Im Rahmen der vorliegenden Erfindung bezeichnen (Meth)acrylate, Acrylate, Methacrylate sowie Mischungen aus beiden. Sie umfassen somit Verbindungen, welche mindestens eine Gruppe der folgenden Formel aufweisen

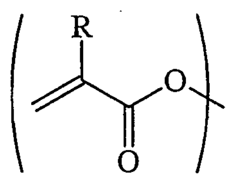

wobei R Wasserstoff oder einen Methylrest kennzeichnet. Zu ihnen gehören insbesondere die vorstehend genannten Alkylacrylate und Alkylmethacrylate. Weiterhin haben sich auch Arylalkylacrylate, insbesondere Benzyl-, Phenylethyl-, Phenylpropyl-, Phenylpentyl-und/oder Phenylhexylacrylat, für die Zwecke der vorliegenden Erfindung als besonders nützlich erwiesen. Sie werden vorzugsweise in einer Menge im Bereich von 0,1 bis 40,0 Gew.-%, bezogen auf das Gesamtgewicht der Komponenten E) und F), eingesetzt.

Die vernetzenden Monomere F) umfassen erfindungsgemäß die vorstehend genannten vernetzenden Monomere C).

Im Rahmen einer ganz besonders bevorzugten Ausführungsform der vorliegenden Erfindung umfasst die zweite Monomermischung

E) 90,0 bis 97,9 Gew.-Teile Alkylacrylate mit 3 bis 8 Kohlenstoffatomen im Alkylrest und/oder Alkylmethacrylate mit 7 bis 14 Kohlenstoffatomen im Alkylrest, insbesondere Butylacrylat und/oder Dodecylmethacrylat,
F) 0,1 bis 2,0 Gew.-% vernetzende Monomere und
G) 0,0 bis 20,0 Gew.-Teile, vorzugsweise 8,0 bis 20,0 Gew.-Teile styrolische Monomere der allgemeinen Formel (I),

wobei sich die Gewichtsteile vorzugsweise zu 100,0 Gew.-Teilen addieren.

Weiterhin erfolgt die Monomerauswahl bzw. die Auswahl der Gewichtsanteile der Monomere E), F) und G) der zweiten Zusammensetzung günstigerweise derart, dass das durch die Polymerisation der zweiten Zusammensetzung erhältliche Polymer eine Glasübergangstemperatur Tg kleiner 30 °C, vorzugsweise kleiner 10 °C, insbesondere im Bereich von 0 bis -75 °C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Die dritte Zusammensetzung enthält

H) 50,0 bis 100,0 Gew.-Teile, zweckmäßigerweise 60,0 bis 100,0 Gew.-Teile, besonders bevorzugt 75,0 bis 100,0 Gew.-Teile, insbesondere 85,0 bis 99,5 Gew.- Teile, Alkylmethacrylate mit 1 bis 20, vorzugsweise 1 bis 12, insbesondere 1 bis 8, Kohlenstoffatomen im Alkylrest,
I) 0,0 bis 40,0 Gew.-Teile, vorzugsweise 0,0 bis 25,0 Gew.-Teile, insbesondere 0,1 bis 15,0 Gew.- Teile, Alkylacrylate mit 1 bis 20, vorzugsweise 1 bis 12, insbesondere 1 bis 8, Kohlenstoffatomen im Alkylrest,
J) 0,0 bis 10,0 Gew.-Teile, vorzugsweise 0,0 bis 8,0 Gew.-% styrolische Monomere der allgemeinen Formel (I),

wobei dich die angegebenen Gewichtsteile vorzugsweise zu 100,0 Gew.-Teile addieren.

Gemäß einer besonders bevorzugten Ausführungsform der vorliegenden Erfindung enthält die dritte Zusammensetzung, bezogen auf das Gesamtgewicht der Komponenten H) bis J), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Weiterhin erfolgt die Monomerauswahl bzw. die Auswahl der Gewichtsanteile der Monomere H), I) und J) der dritten Zusammensetzung günstigerweise derart, dass das durch die Polymerisation der dritten Zusammensetzung erhältliche Polymer eine Glasübergangstemperatur Tg von mindestens 10 °C, vorzugsweise von mindestens 30 °C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Bei dem erfindungsgemäßen Verfahren erfolgt die Polymerisation in den Schritten b) bis d) bei einer Temperatur im Bereich von größer 60 bis kleiner 90 °C, zweckmäßigerweise im Bereich von größer 70 bis kleiner 85 °C, vorzugsweise im Bereich von größer 75 bis kleiner 85 °C.

Die Initiierung erfolgt mit den für die Emulsionspolymerisation gebräuchlichen Initiatoren. Geeignete organische Initiatoren sind beispielsweise Hydroperoxide, wie tert.-Butyl-Hydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Natrium- und Kaliumperoxodisulfat. Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt.

Die Stabilisierung des Ansatzes erfolgt mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0,1 bis 5 Gew.-%, insbesondere 0,5 bis 3 Gew.-%, bezogen auf das Gesamtgewicht der Monomere A) bis J). Besonders geeignete Emulgatoren sind anionische oder nichtionische Emulgatoren oder deren Mischungen, insbesondere:

* Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;

* Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;

* Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;

* Alkylpolyglykolether, vorzugsweise mit 8 bis 20 Kohlenstoffatomen im Alkylrest und 8 bis 40 Ethylenoxideinheiten;

* Alkylarylpolyglykolether, vorzugsweise mit 8 bis 20 Kohlenstoffatomen im Alkyl- bzw. Alkylarylrest und 8 bis 40 Ethylenoxideinheiten;

* Ethylenoxid/Propylenoxid-Copolymere, vorzugsweise Blockcopolymere, günstigerweise mit 8 bis 40 Ethylenoxid-

bzw. Propylenoxideinheiten.

Erfindungsgemäß bevorzugt werden Gemische aus anionischem Emulgator und nichtionischen Emulgator eingesetzt. Dabei haben sich Gemische aus einem Ester oder Halbester der Sulfobernsteinsäure mit einwertigen Alkoholen oder Alkylphenolen mit 4 bis 15 Kohlenstoffatomen im Alkylrest als anionischem Emulgator und einem Alkylpolyglykolether, bevorzugt mit 8 bis 20 Kohlenstoffatomen im Alkylrest und 8 bis 40 Ethylenoxideinheiten, als nichtionischem Emulgator in einem Gewichtsverhältnis von 8 : 1 bis 1 : 8 ganz besonders bewährt.

Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsülfonsäuren, Melaminformaldehydsulfonate, Naphthalinformaldehydsulfonate, Styrol-Maleinsäure- und Vinylethermaleinsäure-Copolymere. Falls Schutzkolloide eingesetzt werden, erfolgt dies vorzugsweise in einer Menge von 0,01 bis 1,0 Gew.-%, bezogen auf die Gesamtmenge der Monomere A) bis I). Die Schutzkolloide können vor dem Start der Polymerisation vorgelegt oder zudosiert werden.

Der Initiator kann vorgelegt oder zudosiert werden. Weiterhin ist es auch möglich, einen Teil des Initiators vorzulegen und den Rest zudosieren.

Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durch geführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt wird der Rest an Emulgator und der Rest an Monomer, welche nicht vorgelegt wurden, nach dem Start der Polymerisation getrennt voneinander zudosiert. Vorzugsweise wird mit der Dosierung 15 bis 35 Minuten nach dem Start der Polymerisation begonnen.

Weiterhin ist es für die Zwecke der vorliegenden Erfindung besonders vorteilhaft, dass die Vorlage ein sogenantes "Saatlatex" enthält, welches vorzugsweise durch Polymerisiation von Alkyl(meth)acrylaten erhältlich ist und darüber hinaus günstigerweise einen Teilchenradius im Bereich von 3,0 bis 20,0 nm, günstigerweise im Bereich von 5,0 bis 20,0 nm, aufweist. Diese kleinen Radien können nach einer definierten Aufpolymerisation des Saatlatex, bei der eine Schale um den Saatlatex aufgebaut wird und die Radien der so hergestellten Teilchen nach dem Coulter-Verfahren gemessen wurden, berechnet werden. Dieses in der Literatur bekannte Verfahren zur Partikelgrößen-Bestimmung beruht auf der Messung des elektrischen Wiederstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Zu dem Saatlatex werden die Monomerbestandteile des eigentlichen Kerns, d. h. die erste Zusammensetzung, vorzugsweise unter solchen Bedingungen zugegeben, dass die Bildung neuer Teilchen vermieden wird. Dadurch wird das in der ersten Verfahrensstufe entstehende Polymerisat schalenförmig um das Saatlatex herum gelagert. Analog werden die Monomerbestandteile des ersten Schalenmaterials (zweite Zusammensetzung) unter solchen Bedingungen zu dem Emulsionspolymerisat zugegeben, dass die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Gemäß einer weiteren bevorzugten Ausführungsform der vorliegenden Erfindung werden die erfindungsgemäßen Kern-Schale-Teilchen durch ein Emulsionspolymerisationsverfahren erhalten werden, bei dem man anstatt des Saatlatexes einen langkettigen, aliphatischen Alkohol, vorzugsweise mit 12 bis 20 Kohlenstoffatomen, emulgiert vorlegt. In einer bevorzugten Ausführungsform dieses Verfahrens wird Stearylalkohol als langkettiger, aliphatischer Alkohol verwendet. Die Kern-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Unabhängig von der konkreten Vorgehensweise hat es sich jedoch im Rahmen der vorliegenden Erfindung als ganz besonders günstig erwiesen, die zweite und die dritte Monomermischung nach Maßgabe des Verbrauchs zuzudosieren.

Die Einstellung der Kettenlängen, insbesondere der (Co)Polymerisate der zweiten Schale (dritte Zusammensetzung), kann durch Polymerisation des Monomers bzw. des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2- Mercaptoethanol oder 2-Ethylhexylthioglycolat, Pentaerythrittetrathioglycolat; wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1. Seite 66, Georg Thieme, Heidelberg,

1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Nach Abschluss der Polymerisation kann zur Restmonomerentfernung in Anwendung bekannter Methoden nachpolymerisiert werden, beispielsweise mittels initiierter Nachpolymerisation.

Da sich das erfindungsgemäße Verfahren insbesondere zur Herstellung von wässrigen Dispersionen mit hohem Feststoffgehalt größer 50 Gew.-%, bezogen auf das Gesamtgewicht der wässrigen Dispersion, eignet, wählt man die relativen Anteile aller Substanzen derart, dass das Gesamtgewicht der Komponenten A) bis J), bezogen auf das Gesamtgewicht der wässrigen Dispersion, größer 50,0 Gew.-%, zweckmäßigerweise größer 51,0 Gew.-%, vorzugsweise größer 52,0 Gew.-%, ist. Zu den in diesem Zusammenhang zu berücksichtigen Substanzen gehören neben den Monomeren A) bis J) auch alle anderen eingesetzten Substanzen, wie Wasser, Emulgator, Initiator, ggf. Regler und Schutzkolloide usw..

Ferner ist es für die Zwecke der vorliegenden Erfindung besonders vorteilhaft, die relativen Anteile aller Komponenten derart zu wählen, dass man Kern-Schale-Teilchen mit einem Gesamtradius, gemessen nach dem Coulter-Verfahren, im Bereich von 150,0 bis kleiner 250,0 nm, vorzugsweise im Bereich von 170,0 bis 220,0 nm, erhält.

Die durch das erfindungsgemäße Verfahren erhältlichen wässrigen Dispersionen zeichnen sich einen niedrigen Koagulatgehalt aus, welcher, bezogen auf das Gesamtgewicht der wässrigen Dispersion, vorzugsweise weniger als 5,0 Gew.-%, zweckmäßigerweise weniger als 3,0 Gew.-%, insbesondere weniger als 1,5 Gew.-% ist. Gemäß einer ganz besonders bevorzugten Ausführungsform der vorliegenden Erfindung weist die wässrige Dispersion, bezogen auf ihr Gesamtgewicht, weniger als 1,0 Gew.-%, vorzugsweise weniger als 0,5 Gew.-%, zweckmäßigerweise weniger als 0,25 Gew.-%, insbesondere 0,10 Gew.-% oder weniger, Koagulat auf.

Dabei bezeichnet der Begriff "Koagulat" in diesem Zusammenhang wasserunlösliche Bestandteile, welche vorzugsweise durch Filtration der Dispersion zweckmäßigerweise über eine Filtermanschette mit eingespanntem Filtergewebe Nr. 0.90 DIN 4188 abfiltriert werden können.

Das erfindungsgemäße Kern-Schale-Teilchen kann aus der Dispersion beispielsweise durch Sprühtrocknen, Gefrierkoagulation, Ausfällen durch Elektrolytzusatz oder durch mechanische oder thermische Belastung, wie sie gemäß DE 27 50 682 A1 oder US 4 110 843 mittels eines Entgasungsextruders durchführbar ist, gewonnen werden. Das Verfahren der Sprühtrocknung ist am gebräuchlichsten, obwohl die anderen genannten Verfahren den Vorzug haben, dass dabei die wasserlöslichen Polymerisationshilfsstoffe wenigstens teilweise von dem Polymerisat abgetrennt werden.

Das erfindungsgemäße Kern-Schale-Teilchen dient zur Verbesserung der Kerbschlagzähigkeit von harten thermoplastischen Kunststoffen, die mit der Hartphase verträglich sind, vorzugsweise von Poly(meth)acrylat-Formmassen, insbesondere von Polymethylmethacrylat.

Die Poly(meth)acrylat-Formmassen enthalten vorzugsweise weitere Polymere, um die Eigenschaften in geeigneter Weise zu modifizieren. Hierzu gehören insbesondere Polyacrylnitrile, Polystyrole, Polyether, Polyester, Polycarbonate und Polyvinylchloride. Diese Polymere können einzeln oder als Mischung eingesetzt werden, wobei im Rahmen einer ganz besonders bevorzugten Ausführungsform der vorliegenden Erfindung Copolymere, die von den zuvor genannten Polymere ableitbar sind, den Formmassen beigefügt werden. Zu diesen gehören insbesondere Styrol-Acrylnitrii-Copolymere (SAN), die vorzugsweise den Formmassen in einer Menge von bis zu 45 Gew.-% beigefügt werden.

Besonders bevorzugte Styrol-Acrylnitril-Copolymere können durch die Polymerisation von Mischungen erhalten werden, die aus

70,0 bis 92,0 Gew.-% Styrol

8,0 bis 30,0 Gew.-% Acrylnitril und

0,0 bis 22,0 Gew.-% weiterer Comonomere, jeweils bezogen auf das Gesamtgewicht der zu polymerisierenden Monomere, bestehen.

In der Regel werden 100 Teilen der zu modifizierenden Formmasse 10 bis 60 Teile des Schlagzäh-Modifizierungsmittels zugemischt.

Erfindungsgemäß besonders bevorzugte Formmasse enthalten, jeweils bezogen auf ihr Gesamtgewicht,:

A) 1,0 bis 50,0 Gew.-% mindestens eines Kern-Schale-Teilchens gemäß mindestens einem der Ansprüche 1 bis 9;

B) 1,0 bis 99,0 Gew.-% mindestens eines (Meth)acrylpolymers,

C) 0,0 bis 45 Gew.-%, vorzugsweise 1,0 bis 45 Gew.-%, Styrol-Acrylnitril-Copolymere und

D)0,0 bis 10,0 Gew.-% weiterer Zusatzstoffe

wobei sich die Gewichtsprozente zu 100,0 Gew.-% addieren.

Dabei umfasst das (Meth)acrylpolymer, jeweils bezogen auf sein Gesamtgewicht, vorzugsweise

a) 50,0 bis 100,0 Gew.-%, zweckmäßigerweise 60,0 bis 100,0 Gew.-%, besonders bevorzugt 75,0 bis 100,0 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,

b) 0,0 bis 40,0 Gew.-%, vorzugsweise 0,0 bis 25,0 Gew.-%, insbesondere 0,1 bis 15,0 Gew.- %, Alkylacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest und

c) 0,0 bis 8,0 Gew.-% styrolische Wiederholungseinheiten der allgemeinen Formel (I),

wobei sich die Gewichtsprozente zu 100,0 Gew.-% addieren.

Gemäß einer besonders bevorzugten Ausführungsform der vorliegenden Erfindung enthält das (Meth)acrylpolymer, bezogen auf sein Gesamtgewicht, mindestens 50,0 Gew.-%, zweckmäßigerweise mindestens 60,0 Gew.-%, vorzugsweise mindestens 75,0 Gew.-%, insbesondere mindestens 85,0 Gew.-% Methylmethacrylat-Wiederholungseinheiten. _

Weiterhin weist das (Meth)acrylpolymer vorzugsweise ein Zahlenmittel des Molekulargewichtes im Bereich von 1.000 bis 100.000.000 g/mol, vorzugsweise im Bereich von 10.000 bis 1.000.000 g/mol, insbesondere im Bereich von 50.000 bis 500.000 g/mol auf. Dabei kann das Molekulargewicht, beispielsweise mittels Gelpermeationschromatographie unter Eichung auf Polystyrol ermittelt werden.

Derartige Mischungen können auf verschiedene Weise hergestellt werden. Man kann beispielsweise die Dispersion des Kern-Schale-Teilchens mit einer wässrigen Dispersion der Abmischkomponente vermischen und die Mischung koagulieren, die Wasserphase abtrennen und das Koagulat zu einer Formmasse verschmelzen. Bei diesem Verfahren lässt sich eine besonders gleichmäßige Vermischung der beiden Massen erzielen. Die Komponenten können auch getrennt hergestellt und isoliert und in Form ihrer Schmelzen oder als Pulver oder Granulate gemischt und in einem Mehrschneckenextruder oder auf einem Walzenstuhl homogenisiert werden.

Übliche Zusätze können in jeder dazu geeigneten Verarbeitungsstufe zugemischt werden. Dazu zählen u. a. Farbstoffe, Pigmente, Füllstoffe, Verstärkungsfasern, Gleitmittel, UV-Schutzmittel usw..

Im Rahmen einer ganz besonders bevorzugten Ausführungsform der vorliegenden Erfindung enthält die Formmasse, jeweils bezogen auf ihr Gesamtgewicht, 0,1 bis 10 Gew.-%, vorzugsweise 0,5 bis 5,0 Gew.-%, insbesondere 1,0 bis 4,0 Gew.-%, eines weiteren Polymerisates (AP), welches im Vergleich mit dem (Meth)acrylpolymer ein um mindestens 10 %, vorzugsweise mindestens 50 %, insbesondere mindestens 100 % höheres Gewichtsmittel des Molekulargewichtes aufweist. Dabei kann das Molekulargewicht, beispielsweise mittels Gelpermeationschromatographie unter Eichung auf Polystyrol ermittelt werden.

Erfindungsgemäß besonders geeignete Polymerisate (AP) umfassen, jeweils bezogen auf ihr Gesamtgewicht, vorzugsweise

a) 50,0 bis 100,0 Gew.-%, zweckmäßigerweise 60,0 bis 100,0 Gew.-%, besonders bevorzugt 75,0 bis 100,0 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,

b) 0,0 bis 40,0 Gew.-%, vorzugsweise 0,0 bis 25,0 Gew.-%, insbesondere 0,1 bis 15,0 Gew.- %, Alkylacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest und

c) 0,0 bis 8,0 Gew.-% styrolische Wiederholungseinheiten der allgemeinen _ Formel (I),

wobei sich die Gewichtsprozente zu 100,0 Gew.-% addieren.

Gemäß einer besonders bevorzugten Ausführungsform der vorliegenden Erfindung enthält das Polymerisat (AP), bezogen auf sein Gesamtgewicht, mindestens 50,0 Gew.-%, zweckmäßigerweise mindestens 60,0 Gew.-%, vorzugsweise mindestens 75,0 Gew.-%, insbesondere mindestens 85,0 Gew.-% Methylmethacrylat-Wiederholungseinheiten.

Weiterhin weist das Polymerisat (AP) vorzugsweise ein Gewichtsmittel des Molekulargewichtes im Bereich von 10.000 bis 100.000.000 g/mol, vorzugsweise im Bereich von 50.000 bis 5.000.000 g/mol, zweckmäßigerweise im Bereich von 100.000 bis 1.000.000 g/mol, insbesondere im Bereich von 250.000 bis 600.000 g/mol auf. Dabei kann das Molekulargewicht, beispielsweise mittels Gelpermeationschromatographie unter Eichung auf Polystyrol ermittelt werden.

Abmischungen der Kern-Schale-Teilchen, insbesondere mit Polymethylmethacrylat, eignen sich insbesondere zur Herstellung von Formkörpern, zweckmäßigerweise mit einer Wanddicke über 1 mm, wie extrudierten Bahnen von 1 bis 10 mm Dicke, die sich gut stanzen lassen und beispielsweise zur Herstellung bedruckbarer Blenden für Elektrogeräte brauchbar sind, oder zur Herstellung von gespritzten Formkörpern hoher Qualität, z. B. Kraftfahrzeugscheiben. Dünnere Folien von beispielsweise 50 μm Dicke können ebenfalls daraus hergestellt werden.

Die erfindungsgemäß erhältlichen Formartikel zeichnen sich

* vorzugsweise durch eine Vicat-Erweichungstemperatur nach ISO 306 (B50) von mindestens 85 °C, bevorzugt von mindestens 90 °C und besonders bevorzugt von mindestens 93 °C,

* vorzugsweise durch eine Kerbschlagzähigkeit nach Charpy (ISO 179) bei 23 °C von mindestens 6,0 kJ/$m^2$, und vorzugsweise von mindestens 2,5 kJ/$m^2$, insbesondere von mindestens 2,5 kJ/$m^2$, bei -10 °C und

* vorzugsweise durch einen E-Modul nach ISO 527-2 von mindestens 1500 MPa

* vorzugsweise durch einen Haze nach ASTM D 1003 (1997) von vorzugsweise maximal 2,5 %,

* vorzugsweise durch eine Schmelzviskosität nach DIN 54811 (1984) größer 2000 Pa s und günstigerweise kleiner 4500 Pa s,

* vorzugsweise durch eine Transmission (D 65/10°) nach DIN 5033/5036 von mindestens 88,5 % sowie

* vorzugsweise durch eine Strangaufweitung nach DIN 54811 (1984) im Bereich von 0 bis 20 %

aus.

Im Rahmen einer besonders bevorzugten Ausführungsform der vorliegenden Erfindung werden die erfindungsgemäßen Formkörper als Spiegelgehäuse oder Spoiler eines Fahrzeugs, als Rohr, als Abdeckung oder als Bauelement eines Kühlschranks eingesetzt.

Die nachfolgenden Beispiele und Vergleichsbeispiele dienen zur Erläuterung der vorliegenden Erfindung, ohne dass hierdurch eine Beschränkung des Erfindungsgedankens erfolgen soll.

<u>I. Kern-Schale-Teilchen</u>

A. Herstellung des Saatlatex

Ein Saatlatex wurde mittels Emulsionspolymerisation einer Monomerzusammensetzung enthaltend 98 Gew.-% Ethylacrylat und 2 Gew.-% Allylmethacrylat hergestellt. Diese im Durchmesser ca. 20 nm großen Partikel lagen zu ca. 10 Gew,-% in Wasser vor.

B. Herstellung der Kern-Schale-Teilchen

Die Synthese der im folgenden beschriebenen Kern-Schale-Teilchen erfolgte gemäß dem Herstellungsverfahren A (erfindungsgemäße Beispiele B1 und B2), B (Vergleichsbeispiele VB1 und VB2), C (Vergleichsbeispiele VB3 und VB4 gemäß US 3 793 402) oder D (Vergleichsbeispiele VB5, VB6 und VB7 gemäß DE 41 36 993). Dabei wurden die in Tabelle 1 angegebenen Emulsionen I bis III eingesetzt.

B.1 Herstellungsverfahren A (erfindungsgemäße Beispiele)

Bei 83 °C (Kessel-Innentemperatur) wurden unter Rühren 19,416 kg Wasser in einem Polymerisationskessel vorgelegt. Es erfolgte eine Zugabe von 16,2 g Natriumcarbonat und 73 g Saatlatex. Anschließend wurde die Emulsion I über 1 h zudosiert. 10 min nach Zulaufende der Emulsion I wurde die Emulsion II über einen Zeitraum von ca. 2 h zudosiert. Anschließend wurde ca. 90 min nach Zulaufende der Emulsion II Emulsion III über einen Zeitraum von ca. 1 h zudosiert. 30 min nach Zulaufende der Emulsion III wurde auf 30 °C abgekühlt.

Zur Separation der Kern-Schale-Teilchen wurde die Dispersion über 2 d bei -20 °C eingefroren, danach wieder aufgetaut und die koagulierte Dispersion über ein Filtergewebe abgetrennt. Die Trocknung des Feststoffs erfolgte bei 50 °C im Trockenschrank (Dauer: ca. 3 d). Weitere Details sind Tabelle 1 zu entnehmen.

Die Teilchengröße der Kern-Schale-Teilchen (s. Tabelle 2) wurde mit Hilfe eines Coulter N4 Gerätes bestimmt, wobei die Partikel in Dispersion vermessen wurden.

B.2 Herstellungsverfahren B (Vergleichsbeispiele VB1 und VB2)

Bei 52 °C (Kessel-Innentemperatur) wurden unter Rühren 20,129 kg Wasser in einem Polymerisationskessel vorgelegt und 1,18 g Essigsäure, 0,04 g Eisen-(II)-sulfat, 12,9 g Natriumdisulfit sowie 121,5 g Saatlatex zugegeben. Anschließend wurde die Emulsion I über 1,5 h zudosiert. 10 min nach Zulaufende der Emulsion I wurde 38,8 g Natriumdisulfit gelöst in 1176 g Wasser zugegeben und die Emulsion II über einen Zeitraum von ca. 2,5 h zudosiert. Anschließend wurden ca. 30 min nach Zulaufende der Emulsion II 12,9 g Natriumdisulfit gelöst in 588,2 g Wasser zugegeben und die Emulsion III wurde über einen Zeitraum von ca. 1,5 h zudosiert. 30 min nach Zulaufende der Emulsion III wurde auf 30 °C abgekühlt und mit Natriumcarbonat auf pH = 8 eingestellt. Ein höherer Feststoffgehalt der resultierenden Dispersion als 48 Gew.-% konnte nicht erreicht werden, da ansonsten eine erhöhte Menge an Koagulat zu beobachten war (> 1 Gew.-% der Dispersion).

Zur Separation der Kern-Schale-Teilchen wurde die Dispersion über 2 d bei -20 °C eingefroren, danach wieder aufgetaut und die koagulierte Dispersion über ein Filtergewebe abgetrennt. Die Trocknung des Feststoffs erfolgte bei 50 °C im Trockenschrank (Dauer: ca. 3 d). Weitere Details sind Tabelle 1 zu entnehmen.

Die Teilchengröße der Kern-Schale-Teilchen (s. Tabelle 2) wurde mit Hilfe eines Coulter N4 Gerätes bestimmt, wobei die Partikel in Dispersion vermessen wurden.

B.3 Herstellungsverfahren C (Vergleichsbeispiele gemäß US 3 793 402)

Die Herstellung der Vergleichsbeispiele VB3 und VB4 erfolgte im wesentlichen analog dem Beispiel 1 aus US 3 793 402. Einzig das Monomerverhältnis der ersten Schale wurde an das der erfindungsgemäßen Beispiele angepasst und die Dispersionen wurden mit Hilfe eines "triple - Batchs" hergestellt, d. h. die Monomere für den Kern, die erste und die zweite Schale wurden jeweils auf einmal zugegeben und dann auspolymerisiert. Weitere Details zur Synthese sind den Tabellen 3 bis 6 zu entnehmen. Die erhaltenen Feststoff- und Koagulatgehalte werden in Tabelle 7 zusammengefasst. Dabei wurde zur Bestimmung des Koagulatgehaltes die gesamte Dispersion über eine VA-Filtermanschette mit eingespanntem Siebgewebe Nr. 0.90 DIN 4188 filtriert. Der anfallende Rückstand wurde solange mit Wasser gespült bis dieses klar ablief. Sofern Koagulat anfiel, wurde dieses mit einem Spatel ausgepresst, in ein vorher tariertes Becherglas gegeben und mit einer Laborwaage auf 0,1g gewogen. Das Filtrat wurde ebenfalls mit der Laborwaage auf 1 g gewogen. Die Masse der gesamten Dispersion errechnet sich aus Masse an Koagulat und Masse an Filtrat.

$$\text{Koagulat (Gew.-\%)} = 100 \times [\text{Masse des anfallenden Koagulates (g)}] / [\text{Masse der gesamten Dispersion (g)}]$$

Die Radien der erhaltenen Kern-Schale-Teilchen sowie deren Teilchengrößenverteilung werden in Tabelle 8 angegeben. Dabei erfolgte in diesem Fall die Charakterisierung der Teilchengröße sowohl mittels eines Coulter N4 Gerätes als auch mittels einer analytischen Ultrazentrifuge. Zusätzlich wird die Teilchengrößenverteilung (TGV) mittels der analytischen Ultrazentrifuge bestimmt. Die in Tabelle 8 angegebenen Größen sind wie folgt definiert:

R10, R50, R90: Radius unterhalb dem 10, 50 bzw. 90 Gew.-% der Kern-Schale-Teilchen in der Dispersion zu finden sind

U80: $= (R90 - R10) / R50$
(Maß für Einheitlichkeit der TGV – deckt 80 Gew.-% der Kern-Schale-Teilchen ab)

B.4 Herstellungsverfahren D (Vergleichsbeispiele gemäß DE 41 36 993)

Die Herstellung der Vergleichsbeispiele VB5, VB6 und VB7 erfolgte im wesentlichen gemäß Beispiel 1 aus DE 41 36 993. Allerdings wurde die Vorlageemulsionsmenge von 30 auf 20 Gew.-% reduziert, um die Teilchengröße der Dispersionen an die der erfindungsgemäßen Beispiele einzustellen. Weiterhin wurde in der letzten Stufe eine wässrige Initiatorlösung zudosiert. Weitere Details zur Synthese sind den Tabellen 3 bis 6 zu entnehmen, die charakteristischen Kenngrößen werden in den Tabellen 7 und 8 zusammengefasst und mit dem Polymerisat B1 verglichen.

C. Herstellung einer Abmischdispersion

Die Abmischdispersion (Feststoffgehalt ca. 50 Gew.-%) wird über eine Emulsionspolymerisation hergestellt und hat die Monomerzusammensetzung von 95 Gew.-% Methylmethacrylat und 5 Gew. - % Ethylacrylat. Die Teilchengröße der Partikel liegt bei 260 nm im Durchmesser (gemessen im Coulter N4 - Bestimmungsgerät) und der J-Wert des

Polymeren (Maß für das Molekulargewicht) liegt bei 203 mL /g (gemessen in Chloroform bei einer Temperatur von 25 °C, DIN ISO 1628-6)

II. Formmassen

A. Abmischung der Formmassen

Eine Formmasse auf Polymethylmethacrylat-Basis, PLEXIGLAS® 7 N (Fa. Röhm GmbH & Co. KG, Darmstadt) wurde mit den jeweiligen Kern-Schale-Teilchen mittels Extruder abgemischt.

B. Prüfung der Formmassen

Aus den abgemischten Formmassen wurden Prüfkörper hergestellt. Die Formmassen bzw. die entsprechenden Prüfkörper wurden gemäß den folgenden Messmethoden geprüft:

- Schmelzviskosität ηs (220 °C/5 MPa): DIN 54811 (1984)
- Strangaufweitung B: DIN 54811 (1984)
- Vicat-Erweichungstemperatur (16 h/80 °C): DIN 1S0 306 (Aug. 1994)
- Izod - Kerbschlagzähigkeit: ISO 180 (1993)
- Charpy - Kerbschlagzähigkeit: ISO 179 (1993)
- E-Modul: ISO 527-2
- Transmission (D 65/10°): DIN 5033/5036
- Haze (Hazemeter BYK Gardner Hazegard-plus): ASTM D 1003 (1997)

Die Ergebnisse der Prüfungen sind ebenfalls in Tabelle 2 zu sehen.

Man erkennt eindeutig die Vorteile der erfindungsgemäßen Abmischungen A, B, C und D gegenüber den herkömmlich schlagzähmodifizierten Formmassen (VB A und VB B):

Bei vergleichbarem Gehalt der Kern-Schale-Teilchen (< 40 Gew.-%) liegt die Kerbschlagzähigkeit nach Charpy der erfindungsgemäßen Formmassen bei 23 °C deutlich höher als die der Vergleichsformmassen und bei -10 °C auf vergleichbarem Niveau.

Tabelle 2: Prüfergebnisse der schlagzähmodifizierten Formmassen

| Abmischung | VB A | VB B | A | B | C | D* |
|---|---|---|---|---|---|---|
| Kern-Schale-Teilchen | VB1 | VB2 | B1 | B1 | B2 | B2 |
| Teilchenradius [nm] | | | 188 | 188 | 164 | 164 |
| Gehalt an Kern-Schale-Teilchen in Plexiglas® 7N [Gew.-%] | 39,3 | 39,3 | 38,4 | 35,7 | 38,4 | 38,4 |
| Viskosität ηs [Pa s] | 2120 | 2780 | 3210 | 3060 | 3210 | 3600 |
| Strangaufweitung B [%] | 21,4 | 11,0 | 3,8 | 6,9 | 5,6 | 12,6 |
| Vicat-Erweichungstemperatur [°C] | 99,8 | 95,5 | 95,6 | 96,2 | 94,9 | 95 |
| Izod - Kerbschlagzähigkeit | | | | | | |
| 23°C: [kJ/m$^2$] | | | 6,2 | 6,1 | 6,4 | 6,0 |
| -10°C: [kJ/m$^2$] | | | 4,1 | 3,5 | 3,6 | 3,7 |
| Charpy - Kerbschlagzähigkeit | | | | | | |
| 23°C: [kJ/m$^2$] | 5,2 | 6,0 | 7,4 | 6,7 | | |
| -10°C: [kJ/m$^2$] | 2,0 | 2,9 | 3,9 | 2,7 | | |
| E-Modul [MPa] | 2180 | 1805 | 1660 | 1900 | | |
| Transmission [%] | 89,1 | 88,7 | 90,5 | | 90,7 | 90,9 |
| Haze | | | | | | |
| 23°C:[%] | 1,2 | 1,3 | 2,3 | 2,0 | 1,8 | 1,6 |
| 40°C:[%] | 5,43 | 5,39 | 5,8 | 5,8 | 4,7 | 4,7 |

*mit Abmischdispersion (3 Gew.-% des Feststoffs in der

Abmischdispersion bezogen auf den Feststoff in der Dispersion)

Tabelle 3: Aufbau der Kern-Schale-Teilchen

| | VB3 | VB4 | VB5 | VB6 | VB7 | B1 |
|---|---|---|---|---|---|---|
| Kern | 25,05 | 25,05 | 20 | 20 | 20 | 35 |
| 1. Schale | 50,5 | 50,5 | 50 | 50 | 50 | 45 |
| 2. Schale | 25 | 25 | 30 | 30 | 30 | 20 |

Tabelle 4: Zusammensetzung des Kerns

| | VB3 | VB4 | VB5 | VB6 | VB7 | B1 |
|---|---|---|---|---|---|---|
| Methylmethacrylat | 99,8 | 99,8 | 98,6 | 98,6 | 98,6 | 95,8 |
| Methylacrylat | | | 0,87 | 0,87 | 0,87 | |
| Ethylacrylat | | | | | | 4,0 |
| Allylmethacrylat | 0,2 | 0,2 | 0,52 | 0,52 | 0,52 | 0,2 |

Tabelle 5: Zusammensetzung der 1. Schale

| | VB3 | VB4 | VB5 | VB6 | VB7 | B1 |
|---|---|---|---|---|---|---|
| Butylacrylat | 81,1 | 81,1 | 80,1 | 80,1 | 80,1 | 81,0 |
| Styrol | 17,9 | 17,9 | 18,9 | 18,9 | 18,9 | 18,1 |
| Allylmethacrylat | 1,0 | 1,0 | 1,0 | 1,0 | 1,0 | 0,9 |

Tabelle 6: Zusammensetzung der 2. Schale

| | VB3 | VB 4 | VB5 | VB6 | VB7 | B1 |
|---|---|---|---|---|---|---|
| Methylmethacrylat | 96,0 | 96, 0 | 96 | 96 | 96 | 90 |
| Ethylacrylat | 4,0 | 4,0 | 4 | 4 | 4 | 10 |
| Dodecylmercaptan | | | | | | |

Tabelle 7: Feststoff- und Koagulatgehalt

| | VB3 | VB4 | VB5 | VB6 | VB7 | B1 |
|---|---|---|---|---|---|---|
| Feststoffgehalt$^+$ [Gew.-%] | 46,3 | 53 | 50,2 | 50,2 | 53 | 53 |
| Koagulat-Gehalt$^+$ [Gew.-%] | 0,2 | >25 | 0,12 | 0,16 | 20 | 0,1 |

$^+$ jeweils bezogen auf das Gesamtgewicht der Dispersion

Tabelle 8: Teilchenradien

| | VB3 | VB4 | VB5 | VB6 | VB7 | B1 |
|---|---|---|---|---|---|---|
| R10[1] [nm] | 172 | | 113 | 133 | | 165 |
| R50[1] [nm] | 163 | | 123 | 145 | | 180 |
| R90[1] [nm] | 166 | | 145 | 168 | | 202 |
| U80[1] | 0,08 | | 0,26 | 0,25 | | 0,21 |
| Teilchenradius[2] [nm] | 191 | | 128 | 162 | | 188 |
| Teilchenradius[2] des Saatlatices bzw. auspolymerisierten | | | 59 | 64 | | 10 |

(fortgesetzt)

| | VB3 | VB4 | VB5 | VB6 | VB7 | B1 |
|---|---|---|---|---|---|---|
| Vorlageemulsion [nm] | | | | | | |

[1] Ultrazentrifuge
[2] gemessen mit Coulter N4

## Patentansprüche

**1.** Verfahren zur Herstellung einer wässrigen Dispersion, bei welchem man

a) Wasser und Emulgator vorlegt,
b) 25,0 bis 45,0 Gew.-Teile einer ersten Zusammensetzung enthaltend

A) 50,0 bis 99,9 Gew.- Teile Alkylmethacrylate mit 1 bis 20 Kohlenstoffatomen im Alkylrest,
B) 0,0 bis 40,0 Gew.- Teile Alkylacrylate mit 1 bis 20 Kohlenstoffatomen im Alkylrest,
C) 0,1 bis 10,0 Gew.- Teile vernetzende Monomere und
D) 0,0 bis 8,0 Gew.- Teile styrolische Monomere der allgemeinen Formel (I)

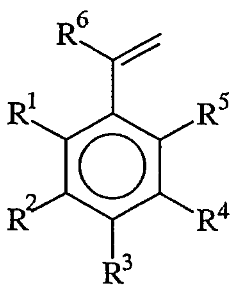

(I)

wobei die Reste $R^1$ bis $R^5$ jeweils unabhängig voneinander Wasserstoff, ein Halogen, eine $C_{1-6}$-Alkylgruppe oder eine $C_{2-6}$ -Alkenylgruppe bezeichnen und der Rest $R^6$ Wasserstoff oder eine Alkylgruppe mit 1 bis 6 Kohlenstoffatomen ist,

zugibt und bis zu einem Umsatz von mindestens 85,0 Gew.-%, bezogen auf das Gesamtgewicht der Komponenten A), B), C) und D), polymerisiert,
c) 35,0 bis 55,0 Gew.-Teile einer zweiten Zusammensetzung enthaltend

E) 80,0 bis 100,0 Gew.- Teile (Meth)acrylate
F) 0,05 bis 10,0 Gew.-Teile vernetzende Monomere und
G) 0,0 bis 20,0 Gew.- Teile styrolische Monomere der allgemeinen Formel (I), zugibt und bis zu einem Umsatz von mindestens 85,0 Gew.-%, bezogen auf das Gesamtgewicht der Komponenten E), F) und G), polymerisiert,

d) 10,0 bis 30,0 Gew.-Teile einer dritten Zusammensetzung enthaltend

H) 50,0 bis 100,0 Gew.- Teile Alkylmethacrylate mit 1 bis 20 Kohlenstoffatomen im Alkylrest,
I) 0,0 bis 40,0 Gew.- Teile Alkylacrylate mit 1 bis 20 Kohlenstoffatomen im Alkylrest und
J) 0,0 bis 10,0 Gew.- Teile styrolische Monomere der allgemeinen Formel (I)

zugibt und bis zu einem Umsatz von mindestens 85,0 Gew.-%, bezogen auf das Gesamtgewicht der Komponenten H), I) und J), polymerisiert,
wobei sich die angegebenen Gewichtsteile der Zusammensetzungen b), c) und d) zu 100,0 Gewichtsteilen addieren,
**dadurch gekennzeichnet, dass** man

e) jede Polymerisation bei einer Temperatur im Bereich von größer 60 bis kleiner 90 °C durchführt und
f) die relativen Anteile aller Substanzen derart wählt, dass das Gesamtgewicht der Komponenten A) bis J), bezogen auf das Gesamtgewicht der wässrigen Dispersion, größer 50,0 Gew.-% ist.

2. Verfahren nach Anspruch 1, **dadurch gekennzeichnet, dass** man eine wässrige Dispersion herstellt, welche weniger als 5,0 Gew.-% Koagulat bezogen auf ihr Gesamtgewicht aufweist.

3. Verfahren nach Anspruch 1 oder 2, **dadurch gekennzeichnet, dass** man 90,00 bis 99,99 Gew.-Teile Wasser und 0,01 bis 10,00 Gew.-Teile Emulgator vorlegt, wobei sich die angegebenen Gewichtsteile zu 100,00 Gewichtsteilen addieren.

4. Verfahren nach mindestens einem der vorangehenden Ansprüche, **dadurch gekennzeichnet, dass** man anionische oder nichtionische Emulgatoren einsetzt.

5. Verfahren nach mindestens einem der vorangehenden Ansprüche, **dadurch gekennzeichnet, dass** man eine wässrige Emulsion vorlegt, welche ein Saatlatex enthält.

6. Verfahren nach Anspruch 5, **dadurch gekennzeichnet, dass** man ein Saatlatex vorlegt, welches einen Teilchenradius, gemessen nach dem Coulter-Verfahren, im Bereich von 5,0 bis 20,0 nm aufweist.

7. Verfahren nach mindestens einem der vorangehenden Ansprüche, **dadurch gekennzeichnet, dass** man eine wässrige Emulsion vorlegt, welche einen Alkylalkohol mit 12 bis 20 Kohlenstoffatomen im Alkylrest enthält.

8. Verfahren nach mindestens einem der vorangehenden Ansprüche,
**dadurch gekennzeichnet, dass** man die Polymerisation in den Schritten b) bis d) unter Verwendung eines Peroxodisulfates, vorzugsweise unter Verwendung von Ammonium- und/oder Alkaliperoxodisulfat, initiiert.

9. Verfahren nach mindestens einem der vorangehenden Ansprüche, **dadurch gekennzeichnet, dass** man die relativen Anteile aller Substanzen derart wählt, dass man Kern-Schale-Teilchen mit einem Gesamtradius, gemessen nach dem Coulter-Verfahren, im Bereich von 150,0 bis kleiner 250,0 nm erhält.

10. Verfahren nach mindestens einem der vorangehenden Ansprüche, **dadurch gekennzeichnet, dass** man die zweite und die dritte Monomermischung nach Maßgabe des Verbrauchs zudosiert.

11. Kern-Schale-Teilchen erhältlich nach einem Verfahren gemäß mindestens einem der vorangehenden Ansprüche, insbesondere gemäß Anspruch 6.

12. Formmasse enthaltend jeweils bezogen auf ihr Gesamtgewicht:

A) 1,0 bis 50,0 Gew.-% mindestens eines Kern-Schale-Teilchens gemäß Anspruch 11;
B) 1,0 bis 99,0 Gew.-% mindestens eines (Meth)acrylpolymers,
C) 0,0 bis 45 Gew.-% Styrol-Acrylnitril-Polymere, und
D) 0,0 bis 10,0 Gew.-% weiterer Zusatzstoffe

wobei sich die Gewichtsprozente zu 100,0 Gew.-% addieren.

13. Formmasse gemäß Anspruch 12, **dadurch gekennzeichnet, dass** das (Meth)acryl)polymer, jeweils bezogen auf sein Gesamtgewicht,

a) 50,0 bis 100,0 Gew.-% Alkylmethacrylat-Wiederholungseinheiten mit 1 bis 20 Kohlenstoffatomen im Alkylrest,
b) 0,0 bis 40,0 Gew.-% Alkylacrylat-Wiederholungseinheiten mit 1 bis 20 Kohlenstoffatomen im Alkylrest und
c) 0,0 bis 8,0 Gew.-% styrolische Wiederholungseinheiten der allgemeinen Formel (I)

umfasst, wobei sich die Gewichtsprozente zu 100,0 Gew.-% addieren.

14. Formmasse gemäß Anspruch 12 oder 13, **dadurch gekennzeichnet, dass** die Formmasse Styrol-Acrylnitril-Copolymere enthält, wobei die Styrol-Acrylnitril-Copolymere durch Polymerisation einer Mischung erhalten wurden, die aus

70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, besteht.

**15.** Formmasse gemäß mindestens einem der Ansprüche 12 bis 14, **dadurch gekennzeichnet, dass** sie, bezogen auf ihr Gesamtgewicht, 0,1 bis 10,0 Gew.-% eines weiteren Polymerisates enthält, welches im Vergleich mit dem (Meth)acrylpolymer b) ein um mindestens 10 % höheres Gewichtsmittel des Molekulargewichtes aufweist.

**16.** Formartikel erhältlich aus einer Formmasse gemäß mindestens einem der Ansprüche 12 bis 15.

**17.** Formartikel gemäß Anspruch 16, **dadurch gekennzeichnet, daß** der Formartikel eine Vicat-Erweichungstemperatur nach ISO 306 (B50) von mindestens 85, bevorzugt von mindestens 90 und besonders bevorzugt von mindestens 93°C, eine Kerbschlagzähigkeit KSZ (Charpy 179/1 eA) nach ISO 179 von mindestens 6,0 kJ/$m^2$ bei 23 °C und von mindestens 2,5 kJ/$m^2$ bei -10°C, einen E-Modul nach ISO 527-2 von mindestens 1500 Pa s, einen Haze nach ASTM D 1003 (1997) von maximal 2,5 %, eine Transmission (D 65/10°) nach DIN 5033/5036 von mindestens 88,5 % aufweist.

## Claims

**1.** Process for preparing an aqueous dispersion, by

a) using water and emulsifier to form an initial charge,
b) adding from 25.0 to 45.0 parts by weight of a first composition comprising

A) from 50.0 to 99.9 parts by weight of alkyl methacrylates having from 1 to 20 carbon atoms in the alkyl radical,
B) from 0.0 to 40.0 parts by weight of alkyl acrylates having from 1 to 20 carbon atoms in the alkyl radical,
C) from 0.1 to 10.0 parts by weight of crosslinking monomers and
D) from 0.0 to 8.0 parts by weight of styrenic monomers of the general formula (I)

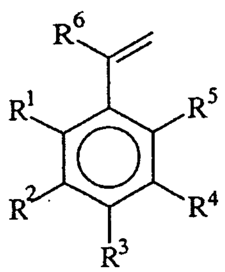

(I)

where each of the radicals $R^1$ to $R^5$, independently of the others, is hydrogen, a halogen, a $C_{1-6}$-alkyl group or a $C_{2-6}$-alkenyl group, and the radical $R^6$ is hydrogen or an alkyl group having from 1 to 6 carbon atoms,

and polymerizing to a conversion of at least 85.0% by weight, based on the total weight of components A), B), C) and D),
c) adding from 35.0 to 55.0 parts by weight of a second composition comprising

E) from 80.0 to 100.0 parts by weight of (meth)acrylates
F) from 0.05 to 10.0 parts by weight of crosslinking monomers and
G) from 0.0 to 20.0 parts by weight of styrenic monomers of the general formula (I),
and polymerizing to a conversion of at least 85.0% by weight, based on the total weight of components E), F) and G),

d) adding from 10.0 to 30.0 parts by weight of a third composition comprising

H) from 50.0 to 100.0 parts by weight of alkyl methacrylates having from 1 to 20 carbon atoms in the alkyl radical,
I) from 0.0 to 40.0 parts by weight of alkyl acrylates having from 1 to 20 carbon atoms in the alkyl radical and
J) from 0.0 to 10.0 parts by weight of styrenic monomers of the general formula (I)
and polymerizing to a conversion of at least 85.0% by weight, based on the total weight of components H), I) and J),

where the parts by weight given for the compositions b), c) and d) give a total of 100.0 parts by weight, **characterized in that**
e) each polymerization is carried out at a temperature in the range from above 60 to below 90°C and
f) the relative proportions of all of the substances are selected in such a way that the total weight of components A) to J), based on the total weight of the aqueous dispersion, is greater than 50.0% by weight.

**2.** Process according to Claim 1, **characterized in that** an aqueous dispersion is prepared which comprises less than 5.0% by weight of coagulate, based on its total weight.

**3.** Process according to Claim 1 or 2, **characterized in that** 90.00 to 99.99 parts by weight of water and from 0.01 to 10.00 parts by weight of emulsifier are used to form an initial charge, where the parts by weight given give a total of 100.00 parts by weight.

**4.** Process according to at least one of the preceding claims, **characterized in that** use is made of an anionic or non-ionic emulsifiers.

**5.** Process according to at least one of the preceding claims, **characterized in that** an aqueous emulsion which comprises a seed latex is used to form an initial charge.

**6.** Process according to Claim 5, **characterized in that** a seed latex whose particle radius, measured by the Coulter method, is in the range from 5.0 to 20.0 nm is used to form an initial charge.

**7.** Process according to at least one of the preceding claims, **characterized in that** an aqueous emulsion which comprises an alkyl alcohol having from 12 to 20 carbon atoms in the alkyl radical is used to form an initial charge.

**8.** Process according to at least one of the preceding claims, **characterized in that** the polymerization in steps b) to d) is initiated using a peroxodisulphate, preferably using ammonium and/or alkali metal peroxodisulphate.

**9.** Process according to at least one of the preceding claims, **characterized in that** the relative proportions of all of the substances are selected in such a way that core-shell particles are obtained with an overall radius, measured by the Coulter method, in the range from 150.0 to less than 250.0 nm.

**10.** Process according to at least one of the preceding claims, **characterized in that** the second and the third monomer mixture are metered in as required by consumption.

**11.** Core-shell particles obtainable by a process according to at least one of the preceding claims, in particular according to Claim 6.

**12.** Moulding composition comprising, based in each case on its total weight:

A) from 1.0 to 50.0% by weight of at least one core-shell particle according to Claim 11;
B) from 1.0 to 99.0% by weight of at least one (meth)acrylic polymer,
C) from 0.0 to 45% by weight of styrene-acrylonitrile polymers, and
D) from 0.0 to 10.0% by weight of other additives

where the percentages by weight give 100.0% by weight in total.

**13.** Moulding composition according to Claim 12, **characterized in that** the (meth)acrylic) [sic] polymer encompasses, based in each case on its total weight,

a) from 50.0 to 100.0% by weight of alkyl methacrylate repeat units having from 1 to 20 carbon atoms in the

alkyl radical,
b) from 0.0 to 40.0% by weight of alkyl acrylate repeat units having from 1 to 20 carbon atoms in the alkyl radical and
c) from 0.0 to 8.0% by weight of styrenic repeat units of the general formula (I),

where the percentages by weight give 100.0% by weight in total.

**14.** Moulding composition according to Claim 12 or 13, **characterized in that** the moulding composition comprises styrene-acrylonitrile copolymers, where the styrene-acrylonitrile copolymers were obtained by polymerizing any mixture which is composed of from 70 to 92% by weight of styrene from 8 to 30% by weight of acrylonitrile and from 0 to 22% by weight of other comonomers, based in each case on the total weight of the monomers to be polymerized.

**15.** Moulding composition according to at least one of Claims 12 to 14, **characterized in that** it comprises, based on its total weight, from 0.1 to 10.0% by weight of another polymer whose weight-average molecular weight is higher by at least 10% than that of the (meth)acrylic polymer b).

**16.** Moulding obtainable from a moulding composition according to at least one of Claims 12 to 15.

**17.** Moulding according to Claim 16, **characterized in that** the moulding has a Vicat softening point ISO 306 (B50) of at least 85, preferably at least 90 and particular preferably at least 93°C, a notched impact strength NIS (Charpy 179/1eA) to ISO 179 of at least 6.0 kJ/$m^2$ at 23°C and of at least 2.5 kJ/$m^2$ at -10 °C, a modulus of elasticity to ISO 527-2 of at least 1500 Pa s, a haze to ASTM D 1003 (1997) of at most 2.5%, a transmittance (D 65/10°) to DIN 5033/5036 of at least 88.5%.

## Revendications

**1.** Procédé de fabrication d'une dispersion aqueuse, dans lequel :

a) on incorpore de l'eau et un agent émulsionnant,
b) on ajoute 25,0 à 45,0 parties en poids d'une première composition, contenant :

A) 50,0 à 99,9 parties en poids de méthacrylates d'alkyle avec 1 à 20 atomes de carbone dans le radical alkyle,
B) 0,0 à 40,0 parties en poids d'acrylates d'alkyle avec 1 à 20 atomes de carbone dans le radical alkyle,
C) 0,1 à 10,0 parties en poids de monomères réticulants et
D) 0,0 à 8,0 parties en poids de monomères styréniques de formule générale (I) :

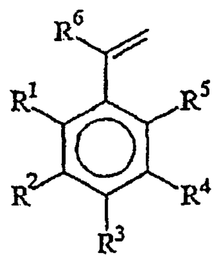

(I)

dans laquelle les radicaux $R^1$ à $R^5$ désignent respectivement, indépendamment l'un de l'autre, l'hydrogène, un halogène, un groupement alkyle en $C_1$-$C_6$ ou un groupement alcényle en $C_2$-$C_6$ et le radical $R^6$ représente l'hydrogène ou un groupement alkyle avec 1 à 6 atomes de carbone, et on polymérise jusqu'à un taux de conversion d'au moins 85,0 % en poids par rapport au poids total des composants A), B), C) et D),

c) on ajoute 35,0 à 55,0 parties en poids d'une deuxième composition, contenant :

E) 80,0 à 100,0 parties en poids de (méth)acrylates,
F) 0,05 à 10,0 parties en poids de monomères réticulants et
G) 0,0 à 20,0 parties en poids de monomères styréniques de formule générale (I),

et on polymérise jusqu'à un taux de conversion d'au moins 85,0 % en poids par rapport au poids total des composants E), F) et G),
d) on ajoute 10,0 à 30,0 parties en poids d'une troisième composition, contenant :

H) 50,0 à 100,0 parties en poids de méthacrylates d'alkyle avec 1 à 20 atomes de carbone dans le radical alkyle,
I) 0,0 à 40,0 parties en poids d'acrylates d'alkyle avec 1 à 20 atomes de carbone dans le radical alkyle, et
J) 0,0 à 10,0 parties en poids de monomères styréniques de formule générale (I),
et on polymérise jusqu'à un taux de conversion d'au moins 85,0 % en poids par rapport au poids total des composants H), I) et J),
la somme des parties en poids indiquées des compositions b), c) et d) faisant un total de 100,0 parties en poids,

**caractérisé en ce que** :
e) chaque polymérisation est réalisée à une température dans la plage de plus de 60 à moins de 90 °C, et
f) on choisit les proportions relatives de toutes les substances de sorte que le poids total des composants A) à J), par rapport au poids total de la dispersion aqueuse, soit supérieur à 50,0 % en poids.

**2.** Procédé selon la revendication 1, **caractérisé en ce que** l'on fabrique une dispersion aqueuse qui présente moins de 5,0 % en poids de coagulat par rapport à leur poids total.

**3.** Procédé selon la revendication 1 ou 2, **caractérisé en ce que** l'on incorpore 90,00 à 99,99 parties en poids d'eau et 0,01 à 10,00 parties en poids d'agent émulsionnant, la somme des parties en poids indiquées faisant un total de 100,00 parties en poids.

**4.** Procédé selon au moins l'une quelconque des revendications précédentes, **caractérisé en ce que** l'on utilise des agents émulsionnants anioniques ou non ioniques.

**5.** Procédé selon au moins l'une quelconque des revendications précédentes, **caractérisé en ce que** l'on incorpore une émulsion aqueuse qui contient un latex d'ensemencement.

**6.** Procédé selon la revendication 5, **caractérisé en ce que** l'on incorpore un latex d'ensemencement qui présente un rayon particulaire, mesuré selon le procédé de Coulter, dans la plage de 5,0 à 20,0 nm.

**7.** Procédé selon au moins l'une quelconque des revendications précédentes, **caractérisé en ce que** l'on incorpore une émulsion aqueuse qui contient un alcool d'alkyle avec 12 à 20 atomes de carbone dans le radical alkyle.

**8.** Procédé selon au moins l'une quelconque des revendications précédentes, **caractérisé en ce que** l'on initie la polymérisation aux étapes b) à d) en utilisant un peroxodisulfate, de préférence en utilisant un peroxodisulfate d'ammonium et/ou de métal alcalin.

**9.** Procédé selon au moins l'une quelconque des revendications précédentes, **caractérisé en ce que** l'on choisit les proportions relatives de toutes les substances de manière à obtenir des particules de type noyau-coque avec un rayon total, mesuré selon le procédé de Coulter, dans la plage de 150,0 à moins de 250,0 nm.

**10.** Procédé selon au moins l'une quelconque des revendications précédentes, **caractérisé en ce que** l'on ajoute de manière dosée le deuxième et le troisième mélanges de monomères en fonction de la consommation.

**11.** Particules de type noyau-coque que l'on peut obtenir par un procédé selon au moins l'une quelconque des revendications précédentes, en particulier selon la revendication 6.

**12.** Masse de moulage contenant respectivement par rapport à son poids total :

A) 1,0 à 50,0 % en poids d'au moins une particule de type noyau-coque selon la revendication 11 ;
B) 1,0 à 99,0 % en poids d'au moins un polymère (méth)acrylique,
C) 0,0 à 45 % en poids de polymères de styrène-acrylonitrile, et
D) 0,0 à 10,0 % en poids d'autres additifs,

la somme des pourcentages en poids faisant un total de 100,0 % en poids.

**13.** Masse de moulage selon la revendication 12, **caractérisée en ce que** le polymère (méth)acrylique comprend, respectivement, par rapport à son poids total :

a) 50,0 à 100,0 % en poids d'unités récurrentes méthacrylate d'alkyle avec 1 à 20 atomes de carbone dans le radical alkyle,
b) 0,0 à 40,0 % en poids d'unités récurrentes acrylate d'alkyle avec 1 à 20 atomes de carbone dans le radical alkyle, et
c) 0,0 à 8,0 % en poids d'unités récurrentes styréniques de formule générale (I), la somme des pourcentages en poids faisant un total de 100,0 % en poids.

**14.** Masse de moulage selon la revendication 12 ou 13, **caractérisée en ce que** la masse de moulage contient des copolymères de styrène-acrylonitrile que l'on a obtenus par polymérisation d'un mélange, qui est constitué de
70 à 92 % en poids de styrène,
8 à 30 % en poids d'acrylonitrile et
0 à 22 % en poids d'autres comonomères, respectivement par rapport au poids total des monomères à polymériser.

**15.** Masse de moulage selon au moins l'une quelconque des revendications 12 à 14, **caractérisée en ce qu'**elle contient, par rapport à son poids total, 0,1 à 10,0 % en poids d'un autre polymère qui, en comparaison du polymère (méth)acrylique b), présente une moyenne en poids du poids moléculaire plus élevée d'au moins 10 %.

**16.** Article moulé qui peut être obtenu à partir d'une masse de moulage selon au moins l'une quelconque des revendications 12 à 15.

**17.** Article moulé selon la revendication 16, **caractérisé en ce que** l'article moulé présente une température de ramollissement Vicat selon la norme ISO 306 (B50) d'au moins 85, de préférence d'au moins 90 et, mieux encore, d'au moins 93 °C, une résistance aux chocs sur barreau entaillé KSZ (Charpy 179/1eA) selon la norme ISO 179 d'au moins 6,0 kJ/$m^2$ à 23 °C et d'au moins 2,5 kJ/$m^2$ à -10 °C, un module E selon la norme ISO 527-2 d'au moins 1500 Pa.s, un trouble selon la norme ASTM D 1003 (1997) d'au maximum 2,5 % et une transmission (D 65/10 °) selon la norme DIN 5033/5036 d'au moins 88,5 %.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3793402 A
- DE 4121652 A1
- DE 4136993 A1
- EP 0828772 B1
- DE 3343766
- DE 3210891
- DE 2850105
- DE 2742178
- DE 3701579
- DE 2750682 A1
- US 4110843 A
- DE 4136993


### In der Beschreibung aufgeführte Nicht-Patentliteratur


- **FOX T. G.** *Bull. Am. Physics Soc.,* 1956, vol. 1 (3), 123
- Polymer Handbook. J. Wiley & Sons, 1975
- *Nachr. Chem. Tech. Lab.,* 1995, vol. 43, 553-566
- **H. RAUCH-PUNTIGAM ; TH. VÖLKER.** Acryl- und Methacrylverbindungen. Springer, 1967
- **HOUBEN-WEYL.** Methoden der organischen Chemie. Georg Thieme, 1961, vol. XIV/1, 66
- **KIRK-OTHMER.** Encyclopedia of Chemical Technology. J. Wiley, 1978, vol. 1, 296ff